# EUROPÄISCHE PATENTSCHRIFT

(11) **EP 1 137 140 B1**
(45) Veröffentlichungstag und Bekanntmachung des Hinweises auf die Patenterteilung: **01.02.2006**
(21) Anmeldenummer: 01106173.6
(22) Anmeldetag: 13.03.2001
(51) Int. Cl.: H02G 3/08, H02G 15/007, F16L 3/10

(54) **Zugentlastungsvorrichtung für ein elektrisches Kabel**
Strain relief for an electrical cable
Soulagement de contrainte pour câble électrique

(30) Priorität: 17.03.2000 DE 20004983 U
(43) Veröffentlichungstag der Anmeldung: 26.09.2001
(73) Patentinhaber: TridonicAtco GmbH & Co. KG, 6851 Dornbirn (AT)
(72) Erfinder: Fritsch, Martin, 6923 Lauterach (AT)
(74) Vertreter: Rupp, Christian

(56) Entgegenhaltungen:
- EP-A- 0 353 539
- DE-C- 903 600
- US-A- 4 379 536

## Beschreibung

Es ist der Zweck einer Zugentlastungsvorrichtung, ein elektrisches Kabel axial zu fixieren, so daß axial am Kabel wirksame Kräfte von der Zugentlastungsvorrichtung aufgenommen werden und somit die elektrischen Leitungen des Kabels von Zugbelastungen freigestellt sind. Dies gilt sowohl für solche Bauteile, die der Halterung eines durchlaufenden Kabels dienen als auch solche Bauteile oder Geräte, die elektrische Anschlüsse aufweisen, mit denen die Adern der elektrischen Leitungen verbunden oder verbindbar sind.. Solche Bauteile können z.B. Durchlaufhalterungen, Anschlußteile oder elektrische Geräte sein, z.B. Transformatoren. Eine Zugentlastungsvorrichtung nach dem Oberbegriff des Anspruchs 1 ist aus US-A-4 379 536 bekannt.

Die Hauptteile einer Zugentlastungsvorrichtung sind eine Basis und ein Klemmteil, zwischen denen sich eine z.B. rinnenförmige Aufnahme befindet, die das Klemmteil überbrückt. Das Klemmteil ist in einer Führung in Richtung auf das Basisteil und zurück verschiebbar gelagert. Zu beiden Seiten der Kabelrinne ist jeweils ein lösbarer Zahneingriff mit ineinandergreifenden Zähnen an nebeneinander liegenden Teilen der Basis und des Klemmteils angeordnet, die eine lösbare Verrastungsvorrichtung bilden. Die Zahneingriffe sind so ausgebildet, daß die ineinandergreifenden Zähne beim Verschieben des Klemmteils in Richtung auf die Basis bzw. ein in der Aufnahme befindliches Kabel aneinander ausweichen und bei einer Rückbewegung selbsttätig ineinandergreifen und die Rückbewegung sperren. Hierdurch ist es möglich, ein in der Aufnahme befindliches Kabel dadurch handhabungsfreundlich und schnell zu fixieren, daß das Klemmteil gegen das Kabel gedrückt wird und dabei in den Zahneingriffen verrastet und das Kabel im Zusammenwirken mit der Basis und durch Klemmwirkung axial fixiert. Zum Lösen des Kabels ist es erforderlich, die Zahneingriffe zu entsperren. Bei bekannten Zugentlastungsvorrichtungen ist dies dadurch möglich, daß jeweils die Zähne des Zahneingriffs dadurch außer Eingriff gebracht werden, daß die Zähne voneinander beabstandet werden. Dies kann dadurch erreicht werden, daß z.B. mit einem Schraubenzieher wenigstens ein Zahn durch Biegen aus seinem Zahneingriff bewegt wird. Diese Maßnahme bedarf besonderer vorheriger Überlegungen und Aufmerksamkeit, um das Werkzeug an der richtigen Stelle ansetzen zu können. Hierdurch ist ein beträchtlicher Zeit- und Handhabungsaufwand vorgegeben, um die Zugentlastungsvorrichtung zu lösen.

Ein werkzeugloses Lösen der Verrastung ist bei einer in der DE 197 23 015 C1 beschriebenen Zugentlastungsvorrichtung möglich. Hier besteht das Klemmelement aus Schenkeln, die in ihrem mittleren Bereich über ein Lagerstück miteinander verbunden sind, so daß die Schenkel in einen Rastbereich mit einer Verzahnung und einen gegenüberliegenden Betätigüngsbereich unterteilt werden. Das Lagerstück ist dabei derart ausgestaltet, daß es je nach Stellung eine Spreizbewegung der Betätigungsbereiche oder ein Verschwenken gegeneinander zuläßt. Im letzten Fall werden durch ein Zusammendrücken der beiden Betätigungsbereiche die Rastbereiche nach außen gedrückt, so daß eine Verrastung der an ihren Innenseiten angeordneten Verzahnungen mit entsprechenden Vorsprüngen eines Gegenstücks gelöst wird. Diese Lösung erlaubt es somit, die Verrastung ohne die Verwendung eines zusätzlichen Werkzeugs zu lösen. Der Aufbau des Klemmelements ist allerdings aufgrund der besonderen Ausgestaltung des Lagerstücks relativ komplex. Eine vergleichbare Vorrichtung ist aus der DE-C-903 600 bekannt.

Der Erfindung liegt daher die Aufgabe zugrunde, eine Zugentlastungsvorrichtung der vorliegenden Art anzugeben, die einen möglichst einfachen Aufbau aufweist und mit einem geringen Aufwand, vorzugsweise werkzeuglos, gelöst werden kann.

Diese Aufgabe wird durch die Merkmale des Anspruches 1 gelöst. Vorteilhafte Weiterbildungen der Erfindung sind in Unteransprüchen beschrieben.

Bei der erfindungsgemäßen Ausgestaltung sind die Schenkel des Klemmteils in Richtung ihrer freien Enden jeweils um ein Betätigungsglied verlängert, wobei die Betätigungsglieder in der Kabel-Klemmstellung manuell zugänglich sind und durch deren Betätigung die Verrastungsvorrichtungen gelöst werden können. Darüber hinaus sind die Zahnungen.

Hierdurch ist es möglich, die Zugentlastungsvorrichtung mit geringem Aufwand handhabungsfreundlich und schnell zu lösen, wobei die Suche nach und der Gebrauch eines Hilfswerkzeugs entfällt. Es ist jedoch möglich, ein Hilfswerkzeug zu benutzen, jedoch ist dies nicht erforderlich.

Die erfindungsgemäße Ausgestaltung berücksichtigt ferner, daß beim Bewegen des Klemmteils gegen ein in der Aufnahme befindliches Kabel nicht nur längs der Bewegungsrichtung gerichtete Widerstandskräfte auf die Zugentlastungsvorrichtung entstehen, sondern auch quer zur Bewegungsrichtung gerichtete Belastungskräfte und zwar insbesondere dann, wenn die Querschnittsabmessung des Kabels in etwas der Breite der Kabelrinne entspricht und beim Zusammendrücken des Kabels durch das Klemmteil das Kabel seitlich gedehnt wird. Hierbei kann diese seitliche Dehnung seitliche Begrenzungswände der Basis überragen, wodurch die Bewegung des Klemmteils in Richtung auf die Basis behindert werden kann. Aufgrund der Führung der Schenkel wird allerdings der Zahneingriff durch die vorbeschriebene Querausdehnung des Kabels nicht oder nur vermindert beeinträchtigt.

Es ist besonders vorteilhaft, die Zugentlastungsvorrichtung so auszubilden, daß die zu beiden Seiten der Aufnahme angeordneten Zahneingriffe durch aufeinanderzu gerichtete Bewegungen der Betätigungsglieder lösbar sind. Hierdurch ist eine besonders handhabungsfreundliche Anordnung gegeben, wobei beide Zahneingriffe dadurch in einfacher Weise gelöst werden können, daß die Betätigungsglieder gegeneinander bewegt werden. Dies läßt sich in einfacher und handhabungsfreundlicher Weise durch Einhandbedienung dadurch bewerkstelligen, daß ein Betätigungsglied mit dem Daumen und das andere Betätigungsglied mit einem der anderen Finger übergriffen und aufeinander zu bewegt werden. Dabei ist aufgrund der biegesteifen Ausbildung der Schenkel und Betätigungsglieder und aufgrund der Anordnung des wenigstens einen Zahns in einem sich parallel zum Schenkel erstreckenden Abstands von einer Gelenkstelle des Schenkels gewährleistet, daß bei der Schwenkbewegung des Schenkels gegen eine elastische Rückstellkraft der Zahn außer Eingriff bewegt wird. Die Rückbewegung des Zahns wird durch die elastische Rückstellkraft besorgt, bei der es sich vorzugsweise um eine Eigenelastizität des insbesondere aus Kunststoff bestehenden Schenkels handelt. Dabei ist es besonders vorteilhaft, das oder die Betätigungsglieder durch eine im wesentlichen gerade Verlängerung des Schenkels zu bilden, vorzugsweise die Verlängerung so auszubilden, daß das oder die Betätigungsglieder von der der Basis abgewandten Seite des Klemmteils zugänglich ist bzw. sind. Dies hat den Vorteil, daß die Betätigungsglieder von der Seite her zugänglich sein, an der sich in der Regel ein Deckel für das das Kabel aufnehmende Befestigungsteil befindet.

In weiteren Unteransprüchen sind Merkmale enthalten, die die Führung des Klemmteils verbessern und das Klemmteil selbst sowie dessen Führungsteile stabilisieren. Außerdem wird zum einen der Zahneingriff und zum anderen dessen Lösung verbessern, so daß der Zahneingriff mit geringem Aufwand handhabungsfreundlich und schnell gelöst werden kann.

Nachfolgend werden die Erfindung und weitere durch sie erzielbare Vorteile anhand von bevorzugten Ausgestaltungen und Zeichnungen näher erläutert. Es zeigt:
Fig. 1 ein elektrisches Befestigungsteil mit wenigstens einer Zugentlastungsvorrichtung für ein elektrisches Kabel im Längsschnitt;
Fig. 2 das Befestigungsteil im Querschnitt nach der Schnittlinie II-II in Fig. 1;
Fig. 3 ein Klemmteil der Zugentlastungsvorrichtung als Einzelteil in perspektivischer Darstellung;

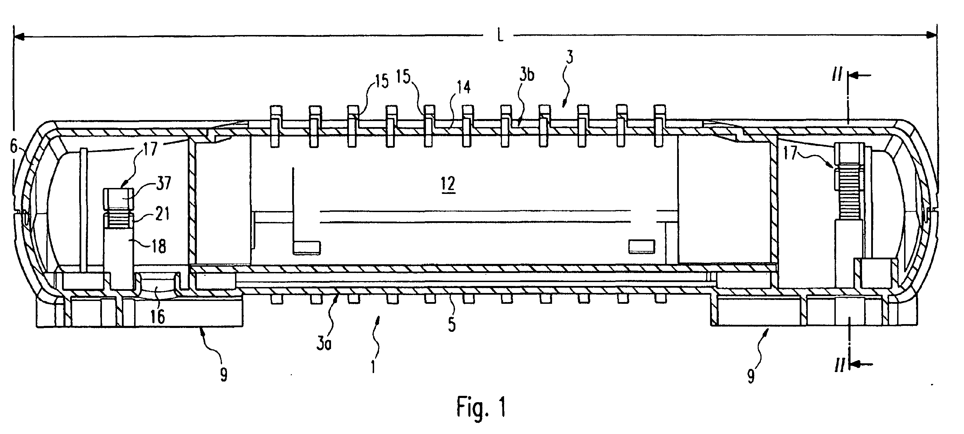

Bei dem in seiner Gesamtheit mit 1 bezeichneten Befestigungsteil kann es sich um ein Bauteil zum Halten oder Durchführen oder Anschließen eines nur in Fig. 1 andeutungsweise im Schnitt dargestellten Kabels 2 dienen. Beim vorliegenden Ausführungsbeispiel dient das Befestigungsteil 1 zum Anschließen des Kabels 2 an ein elektrisches Bauteil, z.B. an einen Transformator, das am Befestigungsteil ebenfalls positionierbar ist, vorzugsweise in einem Gehäuse 3 des Befestigungsteils 1. Das nicht dargestellte elektrische Bauteil kann an eine Kammer des Gehäuses 3 angepaßt und darin aufgenommen und formschlüssig positioniert sein. Das Gehäuse 3 weist die Form eines länglichen und flachen Kastens auf, dessen Höhe H kleiner ist als dessen Breite B und dessen Breite B kleiner ist als dessen Länge L. Das Gehäuse 3 besteht aus zwei Teilen, z.B. aus einem Gehäuseunterteil 3a und einem Gehäusedeckel 3b, wobei eine zugehörige Teilungsfuge 4 bezüglich einer Bodenwand 5 horizontal verläuft, beim vorliegenden Ausführungsbeispiel im Bereich der Umfangswand 6 etwa in deren mittleren Höhe. Hierdurch erhalten das Unterteil und das Oberteil 3a,3b, jeweils die Form einer Schale. Zur seitlichen Positionierung und Abdichtung des Unterteils und des Oberteils 3a,3b ist an einem der beiden Umfangsränder, hier am oberen Umfangsrand ein vertikaler Randsteg 7 angeformt, der etwa schließend in eine Randausnehmung 8 am anderen Umfangsrand einfaßt.

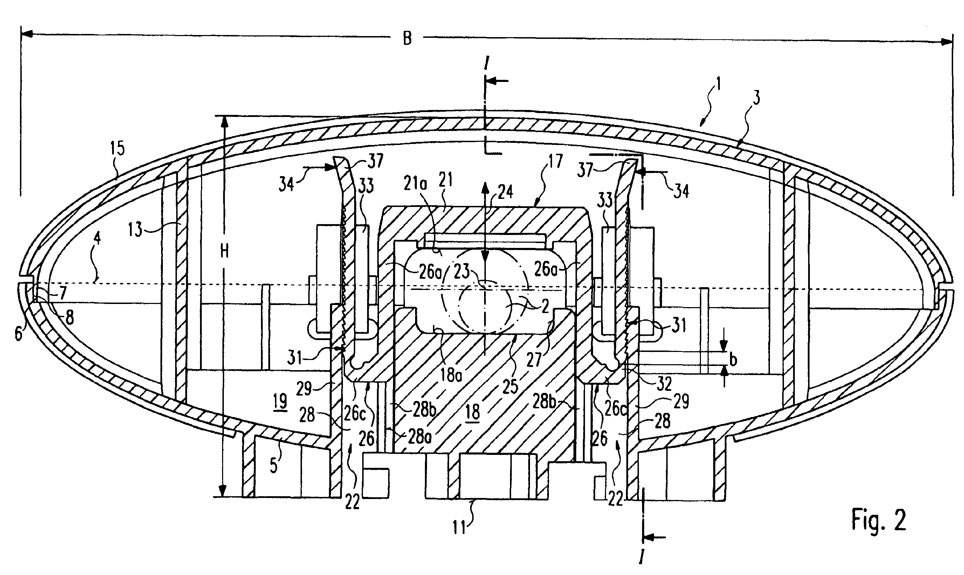

Beim vorliegenden Ausführungsbeispiel weist das Gehäuse 3 im vertikalen Längsschnitt gemäß Fig. 1 eine etwa rechteckige Querschnittsform ggf. mit gerundeten Ecken auf. Im vertikalen Querschnitt gemäß Fig. 2 kann die Querschnittsform des Gehäuses 3 ellipsenförmig sein. Bei dieser Ausgestaltung kann unterseitig an der Bodenwand 5 wenigstens ein Sockel 9 angeformt sein, der eine Anlagefläche 11 bilden kann. Der Sockel 9 kann aus mehreren hohlen Teilen bestehen. Die Kammer 12 zur Aufnahme des elektrischen Bauteils, hier eines Transfomators, kann durch vom Unterteil 3a hochragende oder vom Oberteil 3b herunterragende Längs- und/oder Querwände 13 begrenzt sein. Insbesondere im Bereich der Kammer 12 können an der Bodenwand 5 und/oder an der Deckenwand 14 des Gehäuses 3 außenseitig Rippen 15 angeformt sein, die die Oberfläche vergrößern und die Wärmeabgabe nach außen verbessern. Die Rippen 15 können sich in der quer verlaufenden Umfangsrichtung erstrecken und sind insbesondere im längs gerichteten Bereich der Kammer 12 angeordnet.

Im Bereich eines oder beider Längsenden ist im Gehäuse 3 jeweils ein Kabel-Durchführungsloch 16, z.B. in der Bodenwand 5, und eine Zugentlastungsvorrichtung 17 zur zugentlasteten Befestigung des zugehörigen Kabels 2 am Befestigungsteil 1 vorgesehen. Hierdurch sind ein Kabeleingang und ein Kabelausgang im Gehäuse 3 gebildet. Die Zugentlastungsvorrichtungen 17 sind im Querschnitt, z.B. gemäß Fig. 2, vorzugsweise mittig angeordnet und insbesondere gleich ausgebildet, so daß die nachfolgende Beschreibung nur einer Zugentlastungsvorrichtung 17 ausreicht, um das Befestigungsteil 1 diesbezüglich hinreichend zu beschreiben.

Wie sich deutlich aus Fig. 2 entnehmen läßt, weist die Zugentlastungsvorrichtung 17 eine Basis 18, die innenseitig an der Bodenwand 5 angeordnet ist und vorzugsweise in den freien Innenraum 19 des Gehäuses 3 hineinragt, und ein Klemmteil 21, das in einer die Basis 18 überbrückenden Position angeordnet ist und in einer Führung, hier in zwei seitlichen Führungen 22 quer zur Längsmittelachse 23 des Gehäuses 3 in Richtung auf die Basis 18 und zurück verschiebbar geführt ist. Die Basis 18 und das Klemmteil 21 sind jeweils durch Querstege gebildet, die an ihren einander zugewandten Seiten Klemmkanten oder Klemmstege 18a, 21a aufweisen können. Die vorbeschriebene Verschieberichtung ist durch den Doppelpfeil 24 verdeutlicht und beim vorliegenden Ausführungsbeispiel quer zur Ebene der Teilungsfuge 4 gerichtet. Der wirksame Abstand a, mit dem die Basis in den freien Innenraum 19 hineinragt, ist vorzugsweise so groß bemessen, daß ein auf den Klemmrand der Basis 18 angeordnetes Kabel 2 sich im mittleren Bereich des Gehäuses 3 befindet. Abweichungen von einer exakten mittleren Position sind dadurch vorgegeben, daß Kabel 2 unterschiedlicher Querschnittsgröße vorhanden sein können, wie es Fig. 2 andeutungsweise zeigt, bei der zwei Kabel zwei unterschiedlicher Querschnittsgrößen dargestellt sind.

Zwischen der Basis und dem Klemmteil 21 ist eine vorzugsweise rinnenförmige Kabel-Aufnahme 25 gebildet, die seitlich von zwei Führungsstegen 26, die sich vom Klemmteil 21 in Richtung auf die Basis 18 erstrecken, und ggf. durch die seitlichen Ränder einer Ausnehmung 27 in der Basis 18 begrenzt. Die Führungsstege 26 fassen mit geringem Bewegungsspiel jeweils in ein seitliches Führungsloch 28 in oder am Basisteil 18 ein, wodurch zwei seitliche bzw. eine gemeinsame Führung für das Klemmteil 21 gebildet ist.

Beim vorliegenden Ausführungsbeispiel ist jeder Führungssteg 26 durch drei in U-Form angeordnete und miteinander verbundene Stegabschnitte gebildet, von denen der innere Steg mit Führungsstegabschnitt 26a und der äußere Stegabschnitt mit Schenkel 26b bezeichnet sind, die durch einen kleinen Quersteg 26c U-förmig so miteinander verbunden sind, wobei das freie Ende des Schenkels 26d sich zu der der Basis 18 abgewandten Seite hin erstreckt und vorzugsweise das Klemmteil 21 in seiner Klemmstellung für den größtmöglichen Kabelquerschnitt überragt. An der Außenseite des Schenkels 26b und an der ihm außen benachbarten Seite einer Wand 29, hier der äußeren Führungswand der zugehörigen Führung 22, ist jeweils ein Zahn angeordnet, wobei die Zähne in der das Kabel 2 axial klemmenden Klemmstellung des Klemmteils 21 einen Zahneingriff 31 bilden, der bei einer Verschiebung des Klemmteils 21 in seine Klemmstellung überdrückbar ist, wobei die Zähne übereinander gleiten und einer der Zähne hier der am Schenkel 26b angeordnete Zahn, seitlich ausweicht. Eine Lösbewegung des Klemmteils 21 in die entgegengesetzte Richtung wird formschlüssig gesperrt. Dies wird in an sich bekannter Weise dadurch erreicht, daß die Zähne sägezahnförmig so geformt sind, daß die Zähne sich beim Verschieben in die Klemmstellung an ihren schrägen Zahnrücken gegeneinander abdrücken und bei einer Lösebewegung mit ihren steilen bzw. etwa rechtwinklig zur Verschiebebewegung verlaufenden, einander zugewandten Zahnstirnseiten einander formschlüssig hintergreifen. Der wenigstens eine Zahn am Schenkel 26b ist in einem sich zum freien Ende des Schenkels 26b hin erstreckenden Abstand b von einer Biegestelle oder einem Gelenk 32 vorzugsweise im Anbindungsbereich des Schenkels 26b angeordnet. Der Zahneingriff 31 läßt sich durch ein Schwenken des Schenkels 26b im Gelenk 32 in einen dem Schenkel 26b vorzugsweise innen benachbarten Freiraum 33 lösen, wobei der Zahn aus dem Zahneingriff 31 ausschwenkt. Der Abstand b, die Zahngröße und Schwenkweg bzw. die Breite des Freiraumes 33 sind so aufeinander abgestimmt, daß sich der Zahn in der ausgeschwenkten Stellung des Schenkels 26b in seiner Freigabestellung befindet. Das Ausschwenken des Schenkels 26a erfolgt durch einer Fingerdruck im freien Endbereich gegen eine elastische Rückstellkraft, die den Schenkel 26d in seine Verrastungsstellung zurückzuschwenken sucht. Der Fingerdruck ist durch einen Pfeil 34 verdeutlicht, der beim vorliegenden Ausführungsbeispiel zur Aufnahme 25 bzw. zum Kabel 2 hin gerichtet ist. Es ist möglich, andere Ausrichtungen des Zahneingriffs 31 zu wählen, wodurch sich auch eine andere Schwenkrichtung für den Schenkel 26b ergibt.

Die Schwenk- bzw. Biegestelle 32 ist vorzugsweise durch eine Taillierung Schenkels 26b gebildet, die vorzugsweise im Übergangsbereich zum Quersteg 26c angeordnet ist.

Die so gebildete und in ihrer Gesamtheit mit 35 bezeichnete Verrastungsvorrichtung ist auf der anderen Seite der Aufnahme 25 bezüglich der in Fig. 2 vertikal verlaufenden Längsmittelebene E spiegelbildlich angeordnet und ausgebildet.

Grundsätzlich reicht jeweils ein Zahneingriff 31 mit zwei Zähnen aus um für Kabel 2 immer gleiche Querschnittsgrößen eine sichere Verrastung zu bilden. Da die zu klemmenden Kabel 2 jedoch eine unterschiedliche Elastizität haben und außerdem Kabel 2 mit unterschiedlichen Querschnittsgrößen verwendbar sein sollen, ist es vorteilhaft, am Schenkel 26b und/oder an der Wand 29 mehrere, längs der Verschieberichtung 24 des Klemmteils 21 hintereinander angeordnete gleiche Zähne als Zahnreihe anzuordnen, um in unterschiedlichen Klemmstellungen des Klemmteils 21 jeweils einen Zahneingriff 31 zu gewährleisten. Vorzugsweise sind bei dieser Ausgestaltung immer mehrere Zähne im Eingriff, so daß die Beanspruchung der Zähne vermindert ist. Die oder beide Zahnreihen sind so lang zu bemessen, daß in den Klemmstellungen des Klemmteils 21 jeweils genügend Zähne ineinandergreifen.

Die Zugentlastungsvorrichtung 17 wird am Befestigungsteil 1 bzw. am Unterteil 3b in einer Stellung vormontiert, in der der größtmögliche Kabelquerschnitt in die Aufnahme 25 paßt. Hierzu wird das Klemmteil 21 mit seinen Führungsstegen 26 in die Führungslöcher 28 entsprechend weit eingeschoben, wobei eine entsprechende Anzahl Zähne überdrückt werden und in der Vorfertigungsstellung verrasten. Für ein Klemmen des Kabels 2 an der Baustelle bedarf es dann lediglich einer Verschiebung des Klemmteils 21 in seine gegen das Kabel 2 gerichtete Klemmstellung, wobei aufgrund der vorhandenen kleinen Teilung der Verzahnung eine selbsttätige Verrastung des Klemmteils 21 in der Klemmstellung erfolgt. Eine solche Verschiebung kann handhabungsfreundlich durch Fingerdruck oder durch Druckausübung mittels eines Werkzeugs erfolgen.

Zum Lösen der Zugentlastungsvorrichtung 17 werden die unter Berücksichtigung der erforderlichen Lösekräfte im wesentlichen biegesteifen Schenkel 26b durch Fingerdruck aus ihrer Verrastungsstellung bzw. ihrem Zahneingriff ausgeschwenkt, hier an der Schwenkstelle 32 ausgebogen, wonach das Kabel 2 direkt oder nach einer Verschiebung des Klemmteils 21 in seine Löserichtung in der Aufnahme 25 längs verschoben werden kann.

Beim vorliegenden Ausführungsbeispiel, bei dem die freien Enden der Schenkel 26b durch eine aufeinanderzu gerichtete Schwenkbewegung 34 gelöst werden können, ist die Handhabung besonders vorteilhaft, weil zum einen die Betätigungsglieder 37 bildenden freien Enden der Schenkel 26b mit den Fingern einer Bedienungshand, z.B. Daumen und ein anderer Finger, übergriffen und zusammengedrückt werden können, was sich handhabungsfreundlich und schnell durchführen läßt. In diesem Löse-Griffzustand kann außerdem das Klemmteil 21 in seine Klemmstellung oder in die entgegengesetzte Richtung verschoben werden, ohne daß das Klemmteil 21 erneut ergriffen werden muß. Zur Verbesserung der Grifffestigkeit der Betätigungsglieder 37 bzw. der freien Enden der Schenkel 26b sind diese in die der Schwenkrichtung entgegengesetzte Richtung, hier nach außen, spitzwinklig abgebogen oder abgewinkelt, wodurch die Gefahr eines Abrutschens in der Schrägstellung vermindert ist.

Nach dem Loslassen schwenken die Schenkel 26b aufgrund der vorhandenen, vorzugsweise durch Eigenelastizität gebildeten, Rückstellkraft selbsttätig in ihre Verrastungsstellung zurück.

Das Befestigungsteil 1 bzw. dessen Einzelteile bestehen vorzugsweise aus Kunststoff. Hierdurch ist es möglich, auch schwierige Formen kostengünstig durch Spritzgießen herzustellen. Hierdurch lassen sich auch die Basis 18 am Unterteil 3b und die vorbeschriebenen Abschnitte des Klemmteils 21 einschließlich den zugehörigen Zähnen bzw. Verrastungsteilen jeweils einstückig anformen.

Die Gehäuseteile 3a,3b lassen sich durch Verbindungselemente, z.B. Schrauben, miteinander verbinden, was aus Vereinfachungsgründen nicht dargestellt ist.

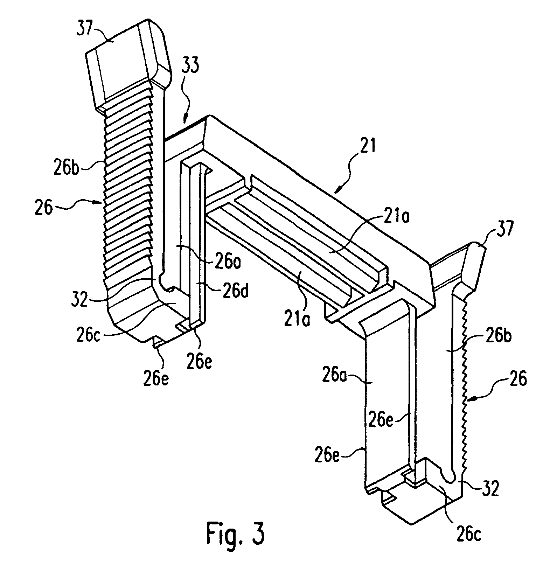

Beim Vorhandensein von Führungsstegen 26, die an ihren Außenseiten bzw. einander abgewandten Seiten Zähne aufweisen, ist es vorteilhaft, die Führungen 22 so auszubilden, daß beim Vorhandensein von Belastungen, die von innen gegen die Führungsstege 26 wirksam sind und diese nach außen zu drücken suchen, der oder die außenseitig an den Führungsstegen 26 angeordneten Zähne von solchen Querbelastungen freigestellt sind. Hierzu können zusätzliche nach innen gerichtete Führungsflächen 28a der Führungslöcher 28 dienen, an denen nach außen gerichtete korrespondierende Führungsflächen 26d der Führungsstege 26 anliegen. Beim vorliegenden Ausführungsbeispiel weisen die Führungsstege 26 am besten in Fig. 3 erkennbare verjüngte Führungsstufen 26e auf, die in zugehörigen Hinterschneidungsnuten 28b der Führungslöcher 28 mit Führungsspiel einfassen und hierdurch geführt sind. Die Führungsstufen 26e sind durch die Führungsflächen 28a der verjüngten Nuten 28b gegen eine nach außen gerichtete Bewegung zusätzlich geführt, so daß die Schenkel 26b bzw. die an ihnen angeordneten Zähne von solchen nach außen gebildeten Belastungen freigestellt sind.

## Patentansprüche

1. Zugentlastungsvorrichtung (17) für ein Kabel (2), mit einer Basis (18) und ein die Basis (18) überbrückendes Brückenteil (21), wobei zwischen der Basis (18) und dem Brückenteil (21) eine Aufnahme (25) für das Kabel (2) gebildet ist,
wobei das Brückenteil (21) bezüglich der Basis (18) in der Längsrichtung einer Führung (22) senkrecht zu der Längserstreckung des Kabels (2) zwischen einer Kabel-Freigabestellung und einer Kabel-Haltestellung verschiebbar ist und in der Haltestellung durch auf beiden Seiten der Aufnahme (25) angeordnete Verrastungsvorrichtungen (35) mit der Basis (18) lösbar verrastbar ist,
wobei die brückenteilseitige Verrastungsvorrichtung (35) durch eine Zahnung an je einem Schenkel (26b) des Brückenteils (21) gebildet ist,
wobei die Schenkel (26b) jeweils mit einem sich vom Brückenteil (21) in Richtung auf die Basis (18) parallel zur Führung (22) erstreckenden Führungsstegabschnitt (26a) U-förmig verbunden sind, wobei die Führungsstegabschnitte (26a) mit wenigstens einem an der Basis (18) oder am Befestigungsteil (1) angeordneten Führungsteil in Führungskontakt stehen,
und wobei zwischen den Schenkeln (26b) und den Führungsstegabschnitten (26a) Freiräume (33) von solcher Größe angeordnet sind, daß die Schenkel (26b) zur Lösung der zugeordneten Verrastungsvorrichtung (35) in die Freiräume (33) schwenkbar sind,
**dadurch gekennzeichnet,**
**dass** das Brückenteil ein Klemmteil ist,
**dass** weiterhin die Kabel-Haltestellung eine Kabel-Klemmstellung ist, und
**dass** jeder der beiden Schenkel (26b) des Brückenteils (21) jeweils in Richtung seines freien Endes um ein Betätigungsglied (37) verlängert ist, das auch in der Kabel-Haltestellung manuell zugänglich ist und durch deren Betätigung die Verrastungsvorrichtungen (35) gelöst werden können,
und **dass** die Zahnungen an den beiden Schenkeln (26b) jeweils mehrere gleiche Zähne als Zahnreihe umfassen.

2. Zugentlastungsvorrichtung nach Anspruch 1,
**dadurch gekennzeichnet,**
**daß** die Schenkel (26b) ihre Zahnungen an ihren einander abgewandten Außenseiten aufweisen.

3. Zugentlastungsvorrichtung nach Anspruch 1 oder 2,
**dadurch gekennzeichnet,**
**daß** die Schenkel (26b) schwenkbar angeordnet sind, und die Zahnung einen Abstand (b) von der Schwenkstelle (32) aufweist.

4. Zugentlastungsvorrichtung nach Anspruch 3,
**dadurch gekennzeichnet,**
**daß** die Schenkel (26b) an einer Biegestelle (32) biegbar sind.

5. Zugentlastungsvorrichtung nach einem der vorherigen Ansprüche,
**dadurch gekennzeichnet,**
**daß** die Schenkel (26b) und/oder die Betätigungsglieder (37) biegesteif sind.

6. Zugentlastungsvorrichtung nach einem der vorherigen Ansprüche,
**dadurch gekennzeichnet,**
**daß** das Führungsteil durch ein Führungsloch (28) in der Basis (18) gebildet ist, in das der Führungssteg (26) mit Führungsspiel einfaßt.

7. Zugentlastungsvorrichtung nach einem der vorherigen Ansprüche,
**dadurch gekennzeichnet,**
**daß** der Führungsstegabschnitt (26a) mit nach außen gerichteten Führungsflächen (26d) an Gegenführungsflächen (28a) der Führung (22) geführt ist.

8. Zugentlastungsvorrichtung nach Anspruch 7,
**dadurch gekennzeichnet,**
**daß** eine basisseitige Zahnung an der dem zugehörigen Schenkel (26b) gegenüberliegenden Innenwand des Führungslochs (28) angeordnet ist.

9. Zugentlastungsvorrichtung nach einem der vorherigen Ansprüche 3 bis 7,
**dadurch gekennzeichnet,**
**daß** die Schenkel (26b) mit Ausnahme des Abstands (b) auf ihrer gesamten Länge die Zahnung aufweisen.

10. Zugentlastungsvorrichtung nach einem der vorherigen Ansprüche,
**dadurch gekennzeichnet,**
**daß** die Betätigungsglieder (37) durch zu ihren freien Enden hin divergente Längsabschnitte der Schenkel (26b) gebildet sind.

## Claims

1. Strain relief device (17) for a cable (2), having a base (18) and a bridge part (21) bridging over the base (18), wherein between the base (18) and the bridge part (21) a receiver (25) for the cable (2) is formed, wherein the bridge part (21), with reference to the base (18), is displaceable in the longitudinal direction of a guide (22) perpendicular to the longitudinal extension of the cable (2), between a cable release position and a cable retaining position, and in the retaining position is releasably latchable with the base (18) by means of latching devices (35) arranged on both sides of the receiver (25),
wherein the latching device (35) on the bridge part is formed by means of a toothing in each case on one limb (26b) of the bridge part (21),
wherein the limbs (26b) are in each case connected in a U-shape with a guide web section (26a) extending parallel to the guide (22) from the bridge part (21) in the direction towards the base (18), wherein the guide web sections (26a) stand in guide contact with at least one guide part arranged on the base (18) or on the fastening part (1),
and wherein between the limbs (26b) and the guide web sections (26a) there are arranged free spaces (33) of such a size that the limbs (26b) are pivotable into the free spaces (33) for release of the associated latching device (35),
**characterized in that**,
the bridge part is a clamp part,
**in that** further the cable retaining position is a cable clamping position, and
**in that** each of the two limbs (26b) of the bridge part (21) is extended in the direction of its free end by an actuating member (37), which is manually accessible also in the cable retaining position and through the actuation of which the latching devices (35) can be released,
and **in that** the toothings on the two limbs (26b) in each case include a plurality of similar teeth as a tooth row.

2. Strain relief device according to claim 1,
**characterized in that**,
the limbs (26b) have their toothings on outer sides facing away from one another.

3. Strain relief device according to claim 1 or 2,
**characterized in that**,
the limbs (26b) are arranged pivotably, and the toothing has a spacing (b) from the pivot point (32).

4. Strain relief device according to claim 3,
**characterized in that**,
the limbs (26b) are bendable at a bend point (32).

5. Strain relief device according to any preceding claim,
**characterized in that**,
the limbs (26b) and/or the actuating members (37) are bend resistant.

6. Strain relief device according to any preceding claim,
**characterized in that**,
the guide part is formed by means of a guide hole (28) in the base (18), into which the guide web (26) engages with guide play.

7. Strain relief device according to any preceding claim,
**characterized in that**,
the guide web section (26a) having outwardly directed guide surfaces (26d) is guided on counter-guide surfaces (28a) of the guide (22).

8. Strain relief device according to claim 7,
**characterized in that**,
a base side toothing is arranged on the inner wall of the guide hole (28) lying opposingly to the associated limb (26b).

9. Strain relief device according to any of preceding claims 3 to 7,
**characterized in that**,
the limbs (26b) have, with the exception of the spacing (b), the toothing over their entire lengths.

10. Strain relief device according to any preceding claim,
**characterized in that**,
the actuating members (37) are formed by means of longitudinal sections of the limbs (26b) divergent towards their free ends.

## Revendications

1. Dispositif d'allégement de contrainte (17) pour un câble (2), comportant une base (18) et un pont (21) surmontant la base (18), un logement (25) pour le câble (2) étant formé entre la base (18) et le pont (21), le pont (21) pouvant coulisser par rapport à la base (18) entre une position de déblocage du câble et une position de blocage du câble dans le sens longitudinal d'une glissière (22) perpendiculairement à la dimension longitudinale du câble (2) et, dans la position de blocage du câble, pouvant être enclenché de manière amovible avec la base (18) par des dispositifs d'arrêt (35) agencés de part et d'autre du logement (25), le dispositif d'arrêt (35) du côté pont étant formé par une denture réalisée sur chaque branche (26b) du pont (21), les branches (26b) étant reliées
chacune, en formant un U, à un bras de patte de guidage (26a) qui s'étend depuis le pont (21) vers la base (18) parallèlement à la glissière (22), les bras de patte de guidage (26a) étant en contact de guidage avec au moins un élément de guidage agencé sur la base (18) ou sur la pièce de fixation (1), et des dégagements (33) étant agencés entre les branches (26b) et les bras de patte de guidage (26a) et ayant une dimension telle que les branches (26b) peuvent pivoter dans les dégagements (33) en vue de désolidariser le dispositif d'arrêt (35) associé, **caractérisé en ce que** le pont est un élément de serrage, **en ce que**, par ailleurs, la position de blocage du câble est une position de serrage et **en ce que** chacune des branches (26b) du pont (21) se prolonge respectivement dans la direction de son extrémité libre par un organe de manoeuvre (37) qui est également accessible manuellement dans la position de blocage du câble et qui est manoeuvré en vue de désolidariser les dispositifs d'arrêt (35), et **en ce que** les dentures sur les deux branches (26b) comportent chacune plusieurs dents identiques agencées en rangs.

2. Dispositif d'allègement de contrainte selon la revendication 1, **caractérisé en ce que** les dentures des branches (26b) sont réalisées sur les faces extérieures opposées de celles-ci.

3. Dispositif d'allègement de contrainte selon la revendication 1 ou 2, **caractérisé en ce que** les branches (26b) sont pivotantes et la denture est située à une distance (b) de la zone de pivotement (32).

4. Dispositif d'allègement de contrainte selon la revendication 3, **caractérisé en ce que** les branches (26b) sont pliables au niveau d'une zone de pliage (32).

5. Dispositif d'allègement de contrainte selon l'une quelconque des revendications précédentes, **caractérisé en ce que** les branches (26b) et/ou les organes de manoeuvre (37) sont résistants à la flexion.

6. Dispositif d'allègement de contrainte selon l'une quelconque des revendications précédentes, **caractérisé en ce que** l'élément de guidage est formé par un trou de guidage (28) dans la base (18), dans lequel la patte de guidage (26) s'enfiche avec du jeu.

7. Dispositif d'allègement de contrainte selon l'une quelconque des revendications précédentes, **caractérisé en ce que** le bras (26a) de la patte de guidage est guidé avec des faces de guidage (26d), orientées vers l'extérieur, sur des faces de guidage complémentaires (28a) de la glissière (22).

8. Dispositif d'allégement de contrainte selon la revendication 7, **caractérisé en ce que** la denture du côté base est réalisée sur la paroi intérieure du trou de guidage (28), face à la branche (26b) correspondante.

9. Dispositif d'allègement de contrainte selon l'une quelconque des revendications 3 à 7, **caractérisé en ce que** les branches (26b) comportent la denture sur toute leur longueur à l'exception de la distance (b).

10. Dispositif d'allègement de contrainte selon l'une quelconque des revendications précédentes, **caractérisé en ce que** les organes de manoeuvre (37) sont formés par des tronçons longitudinaux des branches (26b) divergeant vers leurs extrémités libres.
